# EUROPEAN PATENT SPECIFICATION

(11) **EP 2 448 038 B1**
(45) Date of publication and mention of the grant of the patent: **20.05.2015**
(21) Application number: 11187327.9
(22) Date of filing: 31.10.2011
(51) Int. Cl.: H01M 2/12, H01M 10/42, H01M 10/0525, H02J 7/00, H01M 2/20, H01M 2/10, H01M 10/48, H01M 10/44

(54) **Battery pack apparatus and method of storing a battery pack apparatus**
Batteriepackvorrichtung und Verfahren zum Speichern einer Batteriepackvorrichtung
Appareil à bloc-batteries et procédé pour stocker un appareil à bloc-batteries

(30) Priority: 01.11.2010 JP 2010245142
(43) Date of publication of application: 02.05.2012
(73) Proprietor: Kabushiki Kaisha Toshiba, Minato-ku Tokyo 105-8001 (JP)
(72) Inventor: Notake, Yuichi, Tokyo, Tokyo 105-8001 (JP); Ashida, Kazuhide, Tokyo, Tokyo 105-8001 (JP); Sato, Katsuya, Tokyo, Tokyo 105-8001 (JP)
(74) Representative: Lind, Urban Arvid Oskar

(56) References cited:
- EP-A2- 1 914 861
- US-A1- 2005 242 667
- US-A1- 2009 267 566
- US-A1- 2010 237 829
- US-A1- 2010 253 149

## Description

### FIELD

Embodiments described herein relate generally to a battery pack apparatus formed by combining multiple battery cells, and to a method of storing the battery pack apparatus.

### BACKGROUND

Recently, battery pack apparatuses have been widely used as power sources of electric instruments, electric bicycles, hybrid electric vehicles, electric vehicles and the like. In the battery pack apparatus, multiple battery cells are electrically connected to meet the required output and capacity, and also are mechanically integrated.

In the battery pack apparatus, charge amounts of the respective battery cells generally become non-uniform due to repeated charging and discharging, variations in cell temperatures, and the like. If the battery cells are charged or discharged in this state, some of the battery cells may be over-charged or over-discharged. To prevent this, a cell balance adjustment of equalizing the charge amounts of the respective battery cells is performed.

Moreover, when the battery pack apparatus not in use is stored, the battery cells are charged in such a way that SOC (State Of Charge) of each battery cell is, for example, a charge level of 50%, in order to avoid over charge and over discharge which lead to deterioration of performances of the battery cells. However, since self discharge occurs in the battery cells, supplemental charging (additional charging) needs to be periodically performed when the battery pack apparatus is stored for a long period. The supplemental charging is performed at a constant cycle based on the self discharge characteristics of the battery cells.

However, discharge amount in the self discharge described above varies among the battery cells. Thus, the charge amount of the respective battery cells vary in storage and the degree of variation increases as the storage period becomes longer. In the battery pack apparatus including the battery cells connected in series, this variation in charge amount causes a capacity of the battery pack apparatus in actual use as a module (module capacity) to be reduced.

When the battery cells having uneven charge amounts are supplementally charged, the charge amounts of the respective battery cells are adjusted to be uniform in the cell balance adjustment. However, this supplemental charging is sometimes performed until each of the battery cells is fully charged, in order to improve the effect of suppressing reduction of the module capacity which is obtained by making the charge amounts uniform. An instrument serving as an external load for discharging is required to reduce the SOC of each fully charged battery cell to, for example, a charge level of 50% in such case. For this reason, there is a demand to omit this instrument.

### BRIEF DESCRIPTION OF THE DRAWINGS

Fig. 1 is an exterior perspective view showing an overall configuration of a battery pack apparatus of an embodiment.
Fig. 2 is an exploded perspective view showing the battery pack apparatus shown in Fig. 1 in an exploded state.
Fig. 3 is a block diagram showing an overall configuration of an electrical connection of the battery pack apparatus shown in Figs. 1 and 2.
Fig. 4 is an explanatory view for explaining charging characteristics of battery cells included in the battery pack apparatus shown in Figs. 1 and 2.
Fig. 5 is a flowchart showing a flow of a storage discharging process performed by the battery pack apparatus shown in Figs. 1 and 2.

### DETAILED DESCRIPTION

According to a first aspect of the invention, a battery pack apparatus in accordance with claim 1 is provided.

In one embodiment, the battery pack apparatus comprises: multiple battery cells electrically connected in series; a cell balance adjustor separately discharging the multiple battery cells; a voltage detector separately detecting respective voltages of the multiple battery cells; a controller using the cell balance adjustor to adjust respective charge amounts of the multiple battery cells in such a way that the charge amounts are uniform, in accordance with the respective voltages of the multiple battery cells which are detected by the voltage detector; and a receiver receiving a storage discharging instruction signal instructing the battery pack apparatus to perform storage discharging. The controller uses the cell balance adjustor to discharge the multiple battery cells in a uniform fully-charged state until the charge amounts of the battery cells reach a storage charge amount, once the receiver receives the storage discharging instruction signal.

According to a second aspect of the invention, a method of storing a battery pack apparatus in accordance with claim 5 is provided. In one embodiment, the method of storing a battery pack apparatus comprises: fully charging the battery pack formed by combining multiple battery cells; and after fully charging the battery pack, controlling a circuit equalizing respective charge voltages of the battery cells by discharging, and thus causing the battery pack to discharge until the charge voltages reach a predetermined voltage value between a discharge termination voltage and a charge termination voltage.

Various Embodiments will be described hereinafter with reference to the accompanying drawings.

One embodiment will be described with reference to the drawings.

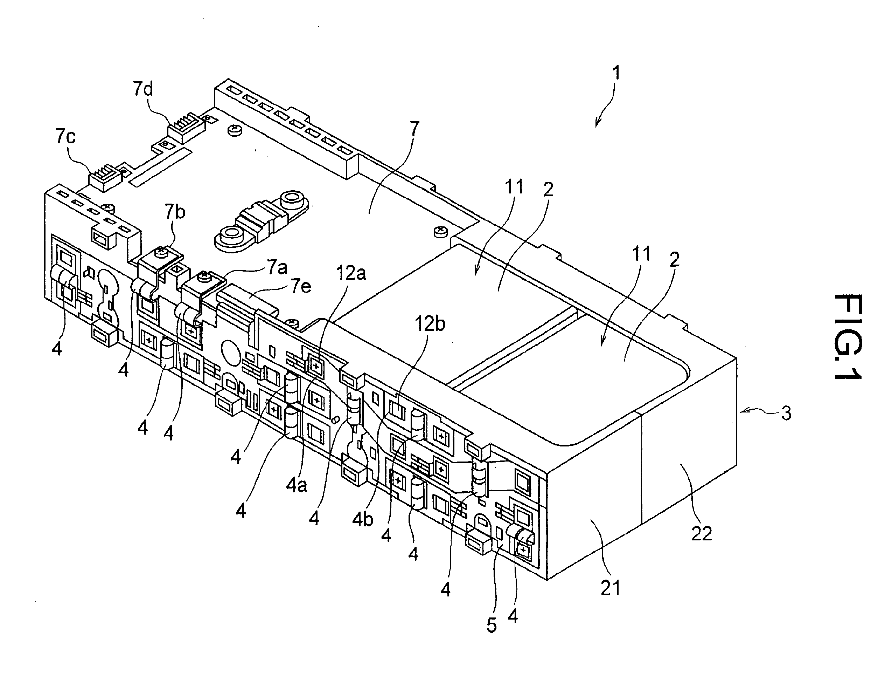

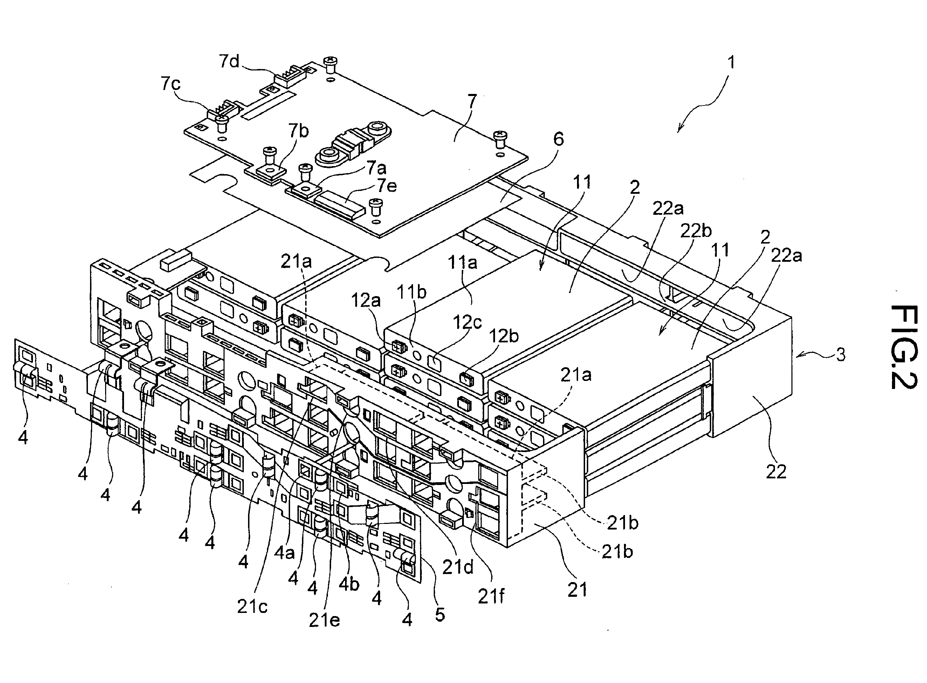

As shown in Figs. 1 and 2, a battery pack apparatus 1 of the embodiment includes multiple battery cells (single cells) 2, a main body case 3 housing the battery cells 2, multiple bus bars 4 electrically connecting the battery cells 2 to each other, a holding substrate 5 holding the bus bars 4 and provided on the main body case 3, and an electronic substrate 7 provided on two of the battery cells 2 with an insulating sheet 6 (see Fig. 2) in between.

Each of the battery cells 2 is a nonaqueous electrolyte secondary battery such as a lithium-ion battery, and includes an exterior container 11 made of aluminum or an aluminum alloy and having a flat rectangular-solid shape and electrode body (not illustrated) housed inside the exterior container 11 together with nonaqueous electrolyte solution. As shown in Fig. 2, for example, ten battery cells 2 are provided and combined to form the battery pack.

The exterior container 11 includes a container main body 11a having an opening at a front end thereof (in Fig. 2) and a rectangular-plate-shaped lid 11b closing the opening of the container main body 11a. The lid 11b is welded to the container main body 11a to make the exterior container 11 liquid tight. An outer surface of the container main body 11a is covered with an insulator (not shown). An insulating sheet for example is used as the insulator. In this case, the insulating sheet is wrapped around the outer surface of the container main body 11a and fixed.

A positive terminal 12a is provided at one end portion of the lid 11b in a longitudinal direction thereof and a negative terminal 12b is provided at the other end portion. The positive terminal 12a and the negative terminal 12b are connected to a positive electrode and a negative electrode of the electrode body in the battery cell 2, respectively, and protrude from an upper surface of the lid 11b. Moreover, one of the terminals, which is, for example, the positive terminal 12a is electrically connected to the lid 11b to have the same potential as the exterior container 11. The negative terminal 12b extends while penetrating the lid 11b, and a sealing member such as a gasket (not shown) made of an insulating material such as a synthetic resin or glass is provided between the negative terminal 12b and the lid 11b. The sealing member air-tightly seals a space between the negative terminal 12b and the exterior container 11, and electrically insulates the negative terminal 12b and the exterior container 11 from each other.

For example, a rectangular safety valve 12c is provided in a center portion of the lid 11b. The safety valve 12c is formed by reducing the thickness of a portion of the lid 11b by about half. A marking (not shown) is formed on an upper surface of a center portion of the portion reduced in thickness. When a gas is generated inside the exterior container 11 due to an abnormality in the battery cell 2 or the like and the pressure inside the exterior container 11 rises to a value equal to or higher than the predetermined value, this safety valve 12c opens to release the gas inside the exterior container 11, and thereby reduces the pressure inside the exterior container 11 to prevent troubles such as rupture of the battery cell 2.

The main body case 3 has a rectangular frame shape having one side opened, and includes a front case 21 and a rear case 22 forming the rectangular frame shape having one side opened. The front case 21 and the rear case 22 are insulative, and are made of resin such as polycarbonate.

The front case 21 has an L-shape including an entire front wall and a half of a side wall. Similarly, the rear case 22 has an L-shape including an entire rear wall and the other half of the side wall. The front case 21 and the rear case 22 are snap-fitted while holding the battery cells 2 therebetween, and are thus integrated as the main body case 3. At this time, the ten battery cells 2 are arranged in a manner that the lids 11b thereof are disposed close to the front case 21, and that the battery cells 2 are stacked in two tiers of four cells each and one tier of two cells on the two tiers, with predetermined gaps provided between one another.

Engagement grooves 21a are provided on an inner surface of the front case 21. The number of the engagement grooves 21a corresponds to the number of the battery cells 2, and is ten in this embodiment. Each of the engagement grooves 21a has an elongated rectangular shape corresponding to a shape of a cross section of the exterior container 11 of the battery cell 2 parallel to the lid 11b, and extends in the longitudinal direction of the front case 21. These engagement grooves 21a are arranged in two tiers of four grooves each and one tier of two grooves, with predetermined gaps provided between one another. Two engagement grooves 21a are missing in a left portion (in Fig. 2) of the uppermost tier. This portion is formed to allow installation of the electronic substrate 7. Moreover, a rib 21b is formed between each two adjacent cell rows extending in the longitudinal direction of the front case 21. These ribs 21b extend along the entire length of the front case 21.

Engagement grooves 22a are provided on an inner surface of the rear case 22. The number of the engagement grooves 22a corresponds to the number of the battery cells 2, and is ten in this embodiment. Each of the engagement grooves 22a has an elongated rectangular shape corresponding to a shape of a cross section of the exterior container 11 of the battery cell 2 parallel to the lid 11b, and extends in the longitudinal direction of the rear case 22. These engagement grooves 22a are arranged in two tiers of four grooves each and one tier of two grooves, with predetermined gaps provided between one another. Two engagement grooves 22a are missing in a left portion (in Fig. 2) of the uppermost tier. This portion is formed to allow installation of the electronic substrate 7. Moreover, a rib 22b is formed between each two adjacent cell rows extending in the longitudinal direction of the rear case 22. These ribs 22b extend along the entire length of the rear case 22.

In a bottom surface of each engagement groove 21a in the front case 21 described above, two rectangular terminal exposing holes 21c and 21d respectively corresponding to the positive terminal 12a and the negative terminal 12b of the corresponding battery cell 2 are formed. These terminal exposing holes 21c and 21d are located respectively at both end portions of the engagement groove 21a. The positive terminal 12a and the negative terminal 12b protrude from a lid surface of each battery cell 2. The positive terminal 12a and the negative terminal 12b of each battery cell 2 in the main body case 3 protrude from a surface of the case through the corresponding terminal exposing holes 21c and 21d.

Moreover, in the bottom surface of each engagement groove 21a, a circular gas discharge hole 21e corresponding to the safety valve 12c of the corresponding battery cells 2 is formed. The gas discharge hole 21e is provided in the middle of the corresponding terminal exposing holes 21c and 21d. When a gas is discharged from the safety valve 12c facing the gas discharge hole 21e, the gas is discharged to the outside though the gas discharge hole 21e. The gas passing through the gas discharge hole 21e flows out through a gap between the front case 21 and the holding substrate 5 and the like.

Furthermore, multiple attachment grooves 21f to which the bus bars 4 are attached and which have shapes corresponding to the shapes of the bus bars 4 are formed in a front surface of the front case 21, i.e. a surface facing the holding substrate 5. The bus bars 4 are attached to the respective attachment grooves 21f, and the battery cells 2 are electrically connected to each other in series by the multiple bus bars 4.

The battery cells 2 are housed by being interposed between the front case 21 and the rear case 22. At this time, front end portions of the battery cells 2, i.e. end portions thereof on the side of the lid 11b, are fitted to the respective engagement grooves 21a of the front case 21, and fixed to the front case 21 by an adhesive or the like. Furthermore, rear end portions of the battery cells 2 are fitted to the respective engagement grooves 22a of the rear case 22, and fixed to the rear case 22 by an adhesive or the like.

Once the positions of the battery cells 2 are determined by this fitting, the battery cells 2 are arranged as follows. Each two battery cells 2 adjacent in the height direction of the main body case 3 are arranged in such a manner that main surfaces of the outer containers 11 of the battery cells 2, i.e. surfaces of the outer containers 11 which have large areas, are parallel and face each other with a predetermined gap in between. Moreover, each two battery cells 2 adjacent in the longitudinal direction of the main body case 3 are arranged with a predetermined gap in between. Eventually, the ten battery cells 2 are fixed in a manner that the lids 11b are disposed on the front side, and that the battery cells 2 are stacked in two tiers of four cells each and one tier of two cells on the two tiers, with predetermined gaps provided between one another.

Each of the bus bars 4 functions as an interterminal connection member which electrically connects the terminals of the adjacent battery cells 2 in a way that the battery cells 2 are connected in series for example. The bus bars 4 are formed by bending metal plates such as aluminum plates.

For example, four types of bus bars are used as the bus bars 4. Specifically, there are five bus bars each connecting the positive terminal 12a and the negative terminal 12b of the battery cells 2 adjacent to each other in the longitudinal direction of the main body case 3, two bus bars (bus bars for connection in an orthogonal direction) each connecting the positive terminal 12a and the negative terminal 12b of the battery cells 2 which are adjacent to each other in the height direction of the main body case 3 and which have the terminals of the same polarity on the same side, two bus bars each connecting the positive terminal 12a and the negative terminal 12b of the battery cells 2 which are adjacent to each other in the height direction of the main body case 3 and which have the terminals of the same polarity on the opposite side, and one positive bus bar and one negative bus bar connected to the electronic substrate 7. Note that, the positive bus bar and the negative bus bar are each formed to have an L-shape.

In one end portion of each bus bar 4, a positive opening 4a is formed which has a shape matching the shape of the positive terminal 12a of the battery cell 2 and which engages with the positive terminal 12a. In the other end portion thereof, a negative opening 4b is formed which has a shape matching the shape of the negative terminal 12b of the battery cell 2 and which engages with the negative terminal 12b. The positive terminals 12a are engaged with the respective positive openings 4a via the terminal exposing holes 21c in the front case 21 and the negative terminals 12b are engaged with the respective negative openings 4b via the terminal exposing holes 21d in the front case 21. Then, in this engagement state, the positive terminals 12a or the negative terminals 12b are welded to the bus bars 4 by laser welding, resistance welding, or the like. In one end of each of the L-shaped positive bus bar and negative bus bar, a through hole for a fixing member such as a screw is formed.

The holding substrate 5 is provided on the front surface of the front case 21 of the main body case 3. The holding substrate 5 is provided with a chip resistance, a thermistor, and the like, in addition to the bus bars 4. For example, a flexible printed-circuit board is used as the holding substrate 5. For example, a polyimide film is used as a material of the flexible printed-circuit board.

The insulating sheet 6 is formed to have a size larger than the area of a back surface of the electronic substrate 7 to insulate the battery cells 2 and the electronic substrate 7 from each other, and is provided on two battery cells 2. The electronic substrate 7 is provided on the insulating sheet 6. A resin such as polycarbonate is used as a material of the insulating sheet 6.

The electronic substrate 7 is provided on the two battery cells 2 with the insulating sheet 6 in between, and is fixed to the front case 21 and the rear case 22 forming the main body case 3 by fixing members such as screws. For example, a printed-circuit board is used as the electronic substrate 7.

A positive land 7a to which the positive bus bar among the bus bars 4 is connected, a negative land 7b to which the negative bus bar among the bus bars 4 is connected, two connectors 7c and 7d for external connection, and a connector 7e for connection with the holding substrate 5 are provided on the electronic substrate 7. The connector 7c is a connector to which wiring such a cable for transmitting and receiving signals to and from an external apparatus is connected. The connector 7d is a connector to which wiring such as a cable for recharging is connected. The connector 7e is a connector to which printed wiring on the holding substrate 5 is connected.

A hole for the fixing member such as a screw is formed in the positive land 7a. The through hole in the end portion of the positive bus bar is aligned with the hole of the positive land 7a, and the positive bus bar is fixed by using the fixing member such as a screw. Similarly, a hole for the fixing member such as a screw is formed in the negative land 7b. The through hole in the end portion of the negative bus bar is aligned with the hole of the negative land 7b, and the negative bus bar is fixed by using the fixing member such as a screw. Note that, the positive land 7a and the negative land 7b are electrically connected to the connector 7d for external connection via printed wiring on the electronic substrate 7.

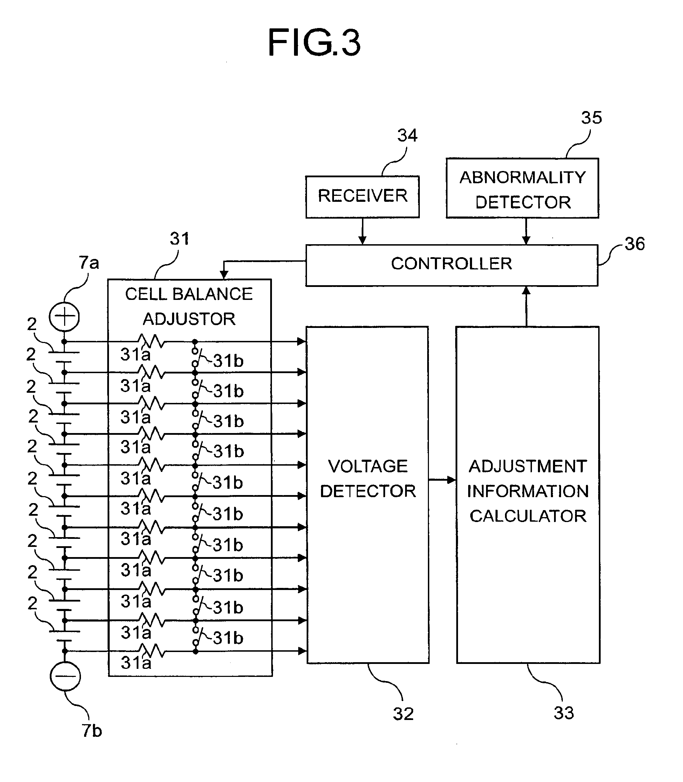

Moreover, as shown in Fig. 3, various parts are mounted on the electronic substrate 7. The various parts include a cell balance adjustor 31 connected to the battery cells 2, a voltage detector 32 separately detecting the respective voltage of battery cells 2, an adjustment information calculator 33 calculating adjustment information used for cell balance adjustment, a receiver 34 receiving instruction signals and the like from the external apparatus, an abnormality detector 35 detecting an abnormality in the battery cells 2, and a controller 36 controlling parts such as the cell balance adjustor 31.

The cell balance adjustor 31 includes multiple discharging resistors 31a and multiple discharging switches 31b, and is formed to be capable of separately discharging the battery cells 2 by using the discharging resistors 31a and discharging switches 31b. The cell balance adjustor 31 functions as a circuit which equalizes the respective charge voltages of the battery cells 2 by discharging the battery cells 2.

Each of the discharging resistors 31a is electrically connected between a corresponding one of the voltage detectors 32 and a corresponding one of the positive terminals 12a and the negative terminals 12b of the battery cells 2. A same discharging resistor 31a is used for two battery cells 2 electrically serially adjacent to each other. Accordingly, the number of the discharging resistors 31a is not twice the number of the battery cells 2, but is one more than the number of the battery cells 2. In Fig. 3, there are ten battery cells 2 and eleven discharging resistors 31.

Each of the discharging switches 31b is electrically connected at a position between two discharging resistors 31a electrically serially adjacent to each other. Specifically, one end of the discharging switch 31b is connected to a side of one discharging resistor 31a which is closer to the voltage detector 32, and the other end of the discharging switch 31b is connected to a side of the discharging resistor 31a electrically serially adjacent to the one discharging resistor 31a which is closer to the voltage detector 32. Accordingly, the number of the discharging switches 31b is the same as the number of the battery cells 2. In Fig. 3, there are ten discharging switches 31b.

Each of the discharging switches 31b has a current capacity large enough to withstand a discharging current determined by the corresponding discharging resistors 31a and the voltage of battery cell 2, and is capable of opening and closing an electrical connection. The structure of the discharging switch 31b is selected as appropriate, and may be a structure in which a physical connection point is opened and closed, a structure in which the opening and closing is performed by using an electrical effect obtained by combining transistors, or the like.

For example, when one of the discharging switches 31b is closed, a closed circuit is formed which includes two discharging resistors 31a and a battery cell 2 corresponding to this discharging switch 31b. Then, the discharging current from this battery cell 2 flows through the two discharging resistors 31a. At this time, energy in the battery cell 2 is converted into Joule heat by the two discharging resistors 31a, and is thus consumed.

The voltage detector 32 measures the respective voltages of the battery cells 2 at a predetermined time. The voltage detector 32 electrically connects the battery cells 2 in parallel to flying capacitors provided for the respective battery cell 2 to charge the flying capacitors at the predetermined time. Then, the flying capacitors are electrically disconnected from the battery cells 2, and the respective voltages of the flying capacitors are sequentially measured. After the measurement, the flying capacitors are connected to the ground potential, and electrical charges are thus released to prepare for the next measurement.

The adjustment information calculator 33 calculates a charge amount difference for each battery cell 2 from a difference between a voltage value of the battery cell 2 which is detected by the voltage detector 32 and the smallest voltage value among all the battery cells 2. Next, the adjustment information calculator 33 performs a predetermined calculation based on the calculated charge amount differences of the respective battery cells 2, and calculates, for each discharging switch 31b, the length of a time period in which the discharging switch 31b is to be closed in the cell balance adjustment, i.e. a discharging time period. The discharging time periods for the respective discharging switches 31b are sent to the controller 36 as the adjustment information, and are used to control the opening and closing of the discharging switches 31b. As described above, in order to resolve variation in the charge amount differences of the battery cells 2, the adjustment information calculator 33 converts discharge amounts required for the respective battery cells 2 with large charge amounts to match the charge amount of the battery cell 2 with the smallest charge amount into predetermined control amounts such as the discharging time periods.

The receiver 34 includes a communication circuit such as UART (Universal Asynchronous Receiver Transmitter). For example, the receiver 34 receives instruction signals from an external apparatus such as a personal computer or a dedicated terminal, and sends the received instruction signals to the controller 36. Signals sent as the instruction signals include an adjustment discharging instruction signal instructing the controller 36 to perform cell balance adjustment discharge, storage discharging instruction signal instructing the controller 36 to perform storage discharging, and the like. Note that, the receiver 34 is electrically connected to the connector 7c (see Figs. 1 and 2) for external connection via the printed wiring on the electronic substrate 7. Accordingly, the instruction signals are sent to the receiver 34 from the external apparatus connected to the connector 7c via the printed wiring on the electronic substrate 7.

The abnormality detector 35 has a protective detection function such as a log tracing operation and abnormal temperature detection. When an abnormality is detected in the battery cells 2, the abnormality detector 35 sends an abnormality detection signal to the controller 36. For example, the abnormality detector 35 traces a log of the battery cells 2 to judge whether there is a problem. When the abnormality detector 35 judges that there is a problem, the abnormality detector 35 sends an abnormality detection signal corresponding to the log abnormality to the controller 36. Moreover, the abnormality detector 35 judges whether the temperature of each battery cell 2 is within an allowable range on the basis of the temperatures sent from the thermistor functioning as a temperature measurement device measuring the temperature of each battery cell 2. If abnormality detector 35 judges that the temperature is not within the allowable range, the abnormality detector 35 sends an abnormality signal corresponding to the abnormal temperature of the battery cell 2 to the controller 36.

The controller 36 adjusts and equalizes the respective charge amounts of the battery cells 2 by using the cell balance adjustor 31, upon receiving the adjustment discharging instruction signal from the receiver 34. The discharging switches 31b of the cell balance adjustor 31 are electrically connected to the controller 36, and can be separately closed and opened by the controller 36. The controller 36 causes each of the discharge switches 31b corresponding to the respective battery cells 2 being discharging targets to be maintained in an on state (closed state) for the discharging time period on the basis of the adjustment information inputted from the adjustment information calculator 33, and thus causes the battery cells 2 to be discharged. Hence, the battery cells 2 with large charge amounts are made to have charge amounts equal to that of the battery cell 2 with the smallest charge amount. Hence, the chagrining amounts of the battery cells 2 are made uniform.

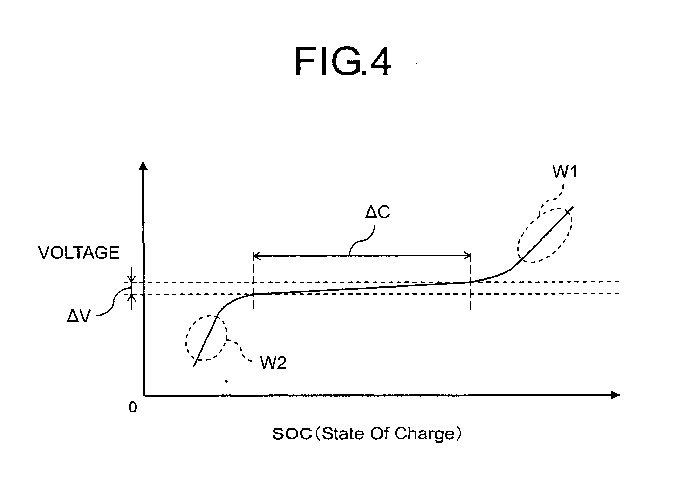

Generally, the voltage of each battery cell 2 monotonically increases relative to increase in SOC (State Of Charge). However, as shown in Fig. 4, depending on the type of the battery cell 2, the inclination of monotonic increase changes in the course of charging. In Fig. 4, there are three types of inclinations, and the inclinations changes from a first inclination to a second inclination, and then to a third inclination. Here, the second inclination is significantly smaller than the other inclinations. Thus, in a SOC region corresponding to the second inclination, a voltage difference Δ is very small even if a SOC difference ΔC is large.

In this respect, a point for measuring the voltage is desirably set in SOC regions where the voltage difference can be easily measured, such as a full charge region W1 and an over discharge region W2. Such setting allows the voltage difference of each battery cell 2 to be accurately obtained independently of a voltage deviation among the battery cells 2. As a result, the charge amount difference of each battery cells 2 can be accurately obtained. In this respect, in the embodiment, the voltage of each battery cell 2 is measured in the full charge region W1 where the charge amount difference surely appears in the voltage difference (potential reference) . The full charge region W1 is a region in which the voltage increases in such an inclination that the charge amount difference surely appears in the potential difference.

Moreover, upon receiving a storage discharging instruction signal from the receiver 34, the controller 36 uses the cell balance adjustor 31 to discharge the battery cells 2 in a uniform fully-charged state which have already been subjected to the cell balance adjustment, until the charge amounts thereof reach the storage charge amount (a predetermined voltage value between a discharge termination voltage and a charge termination voltage). Specifically, the controller 36 obtains a discharging time period required for the charge amounts of the battery cells 2 in the uniform fully-charged state to reach the storage charge amount which is, for example, a charge level of 50%. Then, the controller 36 causes all the battery cells 2 to be discharged based on the obtained discharging time period. Moreover, the controller 36 shuts down to turn off the battery pack apparatus 1 in response to the abnormality detection signal sent from the abnormality detector 35.

Next, descriptions are given of a flow of a storage discharging process performed by the battery pack apparatus 1 described above. The storage discharging process is performed by the controller 36, and thus the storage discharging operation is achieved.

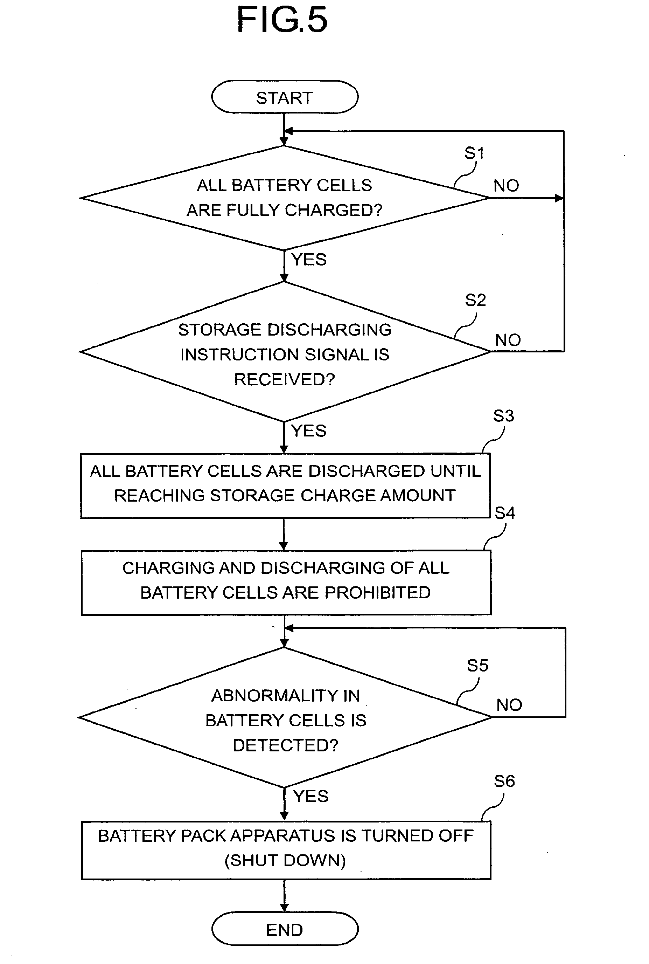

As shown in Fig. 5, first, it is judged whether all the battery cells 2 are fully charged (step S1). When the battery cells 2 are to be fully charged, a charger being an external apparatus is connected to the battery pack apparatus 1, and charging is performed until all the battery cells 2 are fully charged. At this time, the cell balance adjustor 31 performs the cell balance adjustment.

In the cell balance adjustment, each of the battery cells 2 is discharged for the corresponding discharging time period based on the adjustment information, and the battery cells 2 with large charge amounts are made to have charge amounts equal to that of the battery cell 2 with the smallest charge amount. Hence, the cell balance adjustment is achieved, i.e. the chagrining amounts of the battery cells 2 are made uniform. Thus, the charge amounts of the battery cells 2 are uniform in a fully charged state. Thereafter, the charger is disconnected from the battery pack apparatus 1, and the external apparatus such as the personal computer or the dedicated terminal is connected to the battery pack apparatus 1. This external apparatus is a storage discharging instruction signal output apparatus which generates and outputs the storage discharging instruction signal to the battery pack apparatus 1. Note that, a dedicated charger capable of outputting the storage discharging instruction signal may be used as the external apparatus. This dedicated charger is not disconnected from the battery pack apparatus 1 after the charging, but is left connected to the battery pack apparatus 1.

When it is judged in step S1 that all the battery cells 2 are fully charged (YES in step S1), it is judged whether the storage discharging instruction signal is received (step S2). The storage discharging instruction signal inputted to the controller 36 from the external apparatus such as the personal computer, the dedicated terminal, the dedicated charger, or the like via the receiver 34. The input of the storage discharging instruction signal is used to judge whether the storage discharging instruction signal is received.

When it is judged is step S2 that the storage discharging instruction signal is received (YES in step S2), all the battery cells 2 are discharged until reaching the storage charge amount (step S3). Once the storage discharging is completed, charging and discharging of all the battery cells 2 are prohibited (step S4). Specifically, when the storage discharging instruction signal is received, the discharging time period common to all the battery cells 2 is obtained, and the battery cells 2 in the uniform fully-charged state which have already been subjected to the cell balance adjustment are discharged based on the discharging time period. The discharging time period is a time period required for the charge amounts of all the battery cells 2 to reach the storage charge amount which is, for example, a charge level of 50%. Note that, the discharging time period may be set in advance on the basis of an experiment or the like. After the discharging is completed, charging and discharging of all the battery cells 2 are prohibited. At this time, the battery pack apparatus 1 seems as if in a shutdown state from an operator or the like, but in actual, the abnormality detector 35 is performing the regular abnormality detection.

Thereafter, it is judged whether the abnormality detector 35 detects an abnormality in the battery cells 2 (step S5). For example, the abnormality detector 35 detects a log abnormality related to the battery cells 2 or an abnormal temperature of the battery cells 2, and the abnormality detection signal is inputted to the controller 36 from the abnormality detector 35. The input of the abnormality detection signal is used to judge whether an abnormality is detected in the battery cells 2.

When it is judged in step S5 that the abnormality detector 35 detects an abnormality in the battery cells 2 (YES in step S5), a shutdown is performed to turn off the battery pack apparatus 1 (step S6). In other words, when the abnormality detector 35 detects an abnormality, the battery pack apparatus 1 is turned off. Since the detection of abnormality in the battery cells 2 is continuously performed while the battery pack apparatus 1 is stored, the reliability of the battery pack apparatus 1 is improved.

Note that, in the storage discharging process described above, steps S4 and S5 are preformed after the storage discharging of all the battery cells 2 is completed. However, the process is not limited to this. For example, the process may be performed in such a way that the steps S4 and S5 are not performed and the shutdown is performed after the storage discharging of all the battery cells 2 is completed.

As described above, in the embodiment, the charge amounts of the fully charged battery cells 2 are adjusted to be uniform by the cell balance adjustor 31, and thereafter the battery cells 2 in the uniform fully-charged state which have already been subjected to the cell balance adjustment are discharged until reaching the storage charge amount by using the cell balance adjustor 31. Thus, the charge amounts of the all the battery cells 2 are made uniform at the storage charge amount. This suppresses reduction of a module capacity due to variation in the charge amounts of the multiple battery cells 2 electrically connected in series. Moreover, since the cell balance adjustor 31 is used to perform the storage discharging, no instrument serving as an external load for discharging is required. As a result, the cost of the instrument, connection work, and the like can be reduced.

Moreover, after the storage discharging by the cell balance adjustor 31 is completed, charging and discharging of the battery cells 2 are prohibited and the battery pack apparatus 1 is turned off in response to the detection of abnormality in the battery cells 2 by the abnormality detector 35. After the storage discharging, the battery pack apparatus 1 seems as if in a shutdown state from the operator or the like, but in actual, the abnormality detector 35 is performing the regular abnormality detection. Thus, an abnormality in the battery cells 2 can be detected even while the battery pack apparatus 1 is stored. As a result, the reliability of the battery pack apparatus 1 can be improved.

Moreover, the voltages of the battery cells 2 in the full charge region W1 are used, and the charge amounts of the battery cells 2 are adjusted to be uniform by the cell balance adjustor 31. At this time, since the voltages of the battery cells 2 in the full charge region W1 are detected by the voltage detector 32, the voltage differences of the battery cells 2 can be accurately obtained independently of the voltage deviation among the battery cells 2. Thus, the charge amount differences of the battery cells 2 can be obtained accurately. As a result the charging amounts can be accurately equalized.

In the embodiment described above, the storage discharging instruction signal is supplied to the battery pack apparatus 1 in such a way that the storage discharging instruction signal output apparatus (storage discharging instruction signal generation apparatus) is connected to a connector of the battery pack apparatus 1 via a cable and the storage discharging instruction signal is sent from this apparatus. However, a method of supplying the storage discharging instruction signal is not limited to this. For example, the battery pack apparatus 1 may be configured such that an operation part such as a button is provided therein and the storage discharging instruction signal is generated in response to an input operation (input operation of pressing down a button, for example) performed by the operator for the operation part. For example, the operation part is connected to the receiver 34 functioning as a reception circuit receiving a signal from the operation part, and the storage discharging instruction signal is sent to the controller 36 via the receiver 34. Particularly, in a case where a button is used as the operation part, the storage discharging instruction signal may be generated by pressing and holding the button for a certain period. Moreover, in a case where there are multiple buttons, the storage discharging instruction signal may be generated by pressing a certain combination of buttons.

## Claims

1. A battery pack apparatus comprising:
a plurality of battery cells (2) electrically connected in series;
a cell balance adjustor (31) configured to separately discharge the plurality of battery cells;
a voltage detector (32) configured to separately detect voltages respectively of the plurality of battery cells;
an adjustment information calculator (33) configured to calculate adjustment information used for cell balance adjustment;
a controller (36) configured to control the cell balance adjustor to adjust, and make uniform, charge amounts respectively of the plurality of battery cells in accordance with the voltages respectively of the plurality of battery cells which are detected by the voltage detector; and
a receiver (34) configured to receive a storage discharging instruction signal instructing the battery pack apparatus to perform storage discharging,
wherein the controller is further configured to control the cell balance adjustor to adjust the plurality of battery cells until the charge amounts of the battery cells reach a uniform fully-charged state on the basis of the adjustment information inputted from the adjustment information calculator, and discharge the plurality of battery cells in the uniform fully-charged state until the charge amounts of the battery cells reach a storage charge amount on the basis of a discharging time period common to all the battery cells, once the receiver receives the storage discharging instruction signal.

2. The battery pack apparatus according to claim 1, wherein
the controller turns off the battery pack apparatus once the storage discharging by the cell balance adjustor is completed.

3. The battery pack apparatus according to claim 1, wherein
the battery pack apparatus further comprises an abnormality detector (35) configured to detect an abnormality in the plurality of battery cells, and
the controller prohibits charging and discharging of the plurality of battery cells once the storage discharging by the cell balance adjustor is completed, and turns off the battery pack apparatus in response to detection of the abnormality in the plurality of battery cells by the abnormality detector.

4. The battery pack apparatus according to any one of claims 1 to 3, wherein
the controller is further configured to control the cell balance adjustor to adjust and equalize the charge amounts of the respective plurality of battery cells with use of the voltages of the respective plurality of battery cells in a full charge region which are detected by the voltage detector.

5. A method of storing a battery pack apparatus, comprising:
fully charging a battery pack formed by combining a plurality of battery cells (2),
after fully charging the battery pack, controlling a circuit (31) equalizing charge voltages respectively of the battery cells by discharging the battery cells until the charge amounts of the battery cells reach a uniform fully-charged state, and causing the battery cells in the uniform fully-charged state to discharge until the charge voltages reach a predetermined voltage value between a discharge termination voltage and a charge termination voltage, a storage charge amount, on the basis of a discharging time period common to all the battery cells; and
after causing the battery cells to discharge, storing the battery pack.

## Patentansprüche

1. Batteriepackvorrichtung, die Folgendes umfasst:
mehrere Batteriezellen (2), die elektrisch in Reihe verbunden sind;
ein Zellenausgleichseinstellelement (31), das ausgestaltet ist, um die mehreren Batteriezellen getrennt zu entladen;
einen Spannungsdetektor (32), der ausgestaltet ist, um jeweils getrennt Spannungen von den mehreren Batteriezellen zu ermitteln;
einen Einstellungsinformationsrechner (33), der ausgestaltet ist, um Einstellungsinformationen zu berechnen, die für die Zellenausgleichseinstellung verwendet werden;
eine Steuereinrichtung (36), die ausgestaltet ist, um das Zellenausgleichseinstellelement zu steuern, um jeweils Lademengen von den mehreren Batteriezellen gemäß den jeweiligen Spannungen der mehreren Batteriezellen, die durch den Spannungsdetektor ermittelt werden, einzustellen und gleichförmig zu machen, und
einen Empfänger (34), der ausgestaltet ist, um ein Lagerungsentladungs-Befehlssignal zu empfangen, das der Batteriepackvorrichtung befiehlt, eine Lagerungsentladung durchzuführen,
wobei die Steuereinrichtung ferner ausgestaltet ist, um das Zellenausgleichseinstellelement zu steuern, um die mehreren Batteriezellen auf der Grundlage von Einstellungsinformationen, die von dem Einstellungsinformationsrechner eingegeben werden, einzustellen, bis die Lademengen der Batteriezellen einen gleichförmigen, vollständig geladenen Zustand erreichen, und die mehreren Batteriezellen in dem gleichförmigen, vollständig geladenen Zustand auf der Grundlage eines Entladungszeitraums, der allen Batteriezellen gemein ist, zu entladen, bis die Lademengen der Batteriezellen eine Lagerungslademege erreichen, nachdem der Empfänger das Lagerungsentlade-Befehlssignal empfangen hat.

2. Batteriepackvorrichtung nach Anspruch 1, wobei:
die Steuereinrichtung die Batteriepackvorrichtung ausschaltet, nachdem das Lagerungsentladen durch das Zellenausgleichseinstellelement beendet wurde.

3. Batteriepackvorrichtung nach Anspruch 1, wobei:
die Batteriepackvorrichtung ferner einen Anomaliedetektor (35) umfasst, der ausgestaltet ist, um eine Anomalie in den mehreren Batteriezellen zu ermitteln, und
die Steuereinrichtung das Laden und Entladen der mehreren Batteriezellen verbietet, nachdem die Lagerungsentladung durch das Zellenausgleichseinstellelement beendet wurde, und die Batteriepackvorrichtung als Reaktion auf die Ermittlung der Anomalie in den mehreren Batteriezellen durch den Anomaliedetektor ausschaltet.

4. Batteriepackvorrichtung nach einem der Ansprüche 1 bis 3, wobei:
die Steuereinrichtung ferner ausgestaltet ist, um das Zellenausgleichseinstellelement zu steuern, um die Lademengen der entsprechenden mehreren Batteriezellen mit der Verwendung der Spannungen der entsprechenden mehreren Batteriezellen in einem Vollladungsbereich, die durch den Spannungsdetektor ermittelt werden, einzustellen und auszugleichen.

5. Verfahren zum Lagern einer Batteriepackvorrichtung, das Folgendes umfasst:
vollständiges Laden eines Batteriepacks, der durch Kombinieren mehrerer Batteriezellen (2) gebildet wird,
nach dem vollständigen Laden des Batteriepacks, Steuern einer Schaltung (31), die jeweils Ladespannungen der Batteriezellen durch Entladen der Batteriezellen, bis die Lademengen der Batteriezellen einen gleichförmigen, vollständig geladenen Zustand erreichen, ausgleicht und bewirkt, dass die Batteriezellen in dem gleichförmigen, vollständig geladenen Zustand entladen werden, bis die Ladespannungen einen vorbestimmten Spannungswert zwischen einer Entladungsendspannung und einer Ladeendspannung, eine Lagerungslademenge, auf der Grundlage eines Entladezeitraums erreichen, der allen Batteriezellen gleich ist; und
nach dem Bewirken des Entladens der Batteriezellen, Lagern des Batteriepacks.

## Revendications

1. Appareil à bloc-batteries comprenant :
une pluralité de cellules de batterie (2) reliées électriquement en série ;
un ajusteur d'équilibrage de cellules (31) configuré pour décharger séparément la pluralité de cellules de batterie ;
un détecteur de tension (32) configuré pour détecter séparément des tensions respectivement de la pluralité de cellules de batterie ;
un calculateur d'informations d'ajustement (33) configuré pour calculer des informations d'ajustement utilisées pour un ajustement d'équilibrage de cellules ;
un organe de commande (36) configuré pour commander à l'ajusteur d'équilibrage de cellules d'ajuster et d'uniformiser des quantités de charge respectivement de la pluralité de cellules de batterie en fonction des tensions respectivement de la pluralité de cellules de batterie qui sont détectées par le détecteur de tension ; et
un récepteur (34) configuré pour recevoir un signal d'instruction de déchargement de stockage ordonnant à l'appareil à bloc-batteries d'effectuer un déchargement de stockage,
dans lequel l'organe de commande est en outre configuré pour commander à l'ajusteur d'équilibrage de cellules d'ajuster la pluralité de cellules de batterie jusqu'à ce que les quantités de charge des cellules de batterie atteignent un état complètement chargé uniforme sur la base des informations d'ajustement entrées à partir du calculateur d'informations d'ajustement, et décharger la pluralité de cellules de batterie dans l'état complètement chargé uniforme jusqu'à ce que les quantités de charge des cellules de batterie atteignent une quantité de charge de stockage sur la base d'une période de temps de déchargement commune à toutes les cellules de batterie, une fois que le récepteur reçoit le signal d'instruction de déchargement de stockage.

2. Appareil à bloc-batteries selon la revendication 1, dans lequel
l'organe de commande met l'appareil à bloc-batteries hors tension une fois que le déchargement de stockage par l'ajusteur d'équilibrage de cellules est terminé.

3. Appareil à bloc-batteries selon la revendication 1, dans lequel
l'appareil à bloc-batteries comprend en outre un détecteur d'anomalie (35) configuré pour détecter une anomalie dans la pluralité de cellules de batterie, et
l'organe de commande interdit un chargement et un déchargement de la pluralité de cellules de batterie une fois que le déchargement de stockage par l'ajusteur d'équilibrage de cellules est terminé, et met l'appareil à bloc-batteries hors tension en réponse à une détection de l'anomalie dans la pluralité de cellules de batterie par le détecteur d'anomalie.

4. Appareil à bloc-batteries selon l'une quelconque des revendications 1 à 3, dans lequel
l'organe de commande est en outre configuré pour commander à l'ajusteur d'équilibrage de cellules d'ajuster et d'égaliser les quantités de charge de la pluralité respective de cellules de batterie en utilisant les tensions de la pluralité respective de cellules de batterie dans une région de charge complète qui sont détectées par le détecteur de tension.

5. Procédé de stockage d'un appareil à bloc-batteries, comprenant :
le chargement complet d'un bloc-batteries constitué par la combinaison d'une pluralité de cellules de batterie (2),
après le chargement complet du bloc-batteries, la commande à un circuit (31) d'égaliser des tensions de charge respectivement des cellules de batterie en déchargeant les cellules de batterie jusqu'à ce que les quantités de charge des cellules de batterie atteignent un état complètement chargé uniforme, et d'amener les cellules de batterie dans l'état complètement chargé uniforme à se décharger jusqu'à ce que les tensions de charge atteignent une valeur de tension prédéterminée entre une tension de terminaison de décharge et une tension de terminaison de charge, d'une quantité de charge de stockage, sur la base d'une période de temps de déchargement commune à toutes les cellules de batterie ; et
après avoir amené les cellules de batterie à se décharger, le stockage du bloc-batteries.
